# EUROPEAN PATENT APPLICATION

(11) **EP 4 608 057 A1**
(43) Date of publication of application: **27.08.2025**
(21) Application number: 25158771.3
(22) Date of filing: 19.02.2025
(51) Int. Cl.: H04W 76/15, H04W 88/08, H04W 84/12, H04B 7/022

(54) **WIRELESS ACCESS VIA DISTRIBUTED WLAN ACCESS POINT MULTILINK DEVICE (AP-MLD)**

(30) Priority: 26.02.2024 GB 202402661
(71) Applicant: Nokia Technologies Oy, 02610 Espoo (FI)
(72) Inventor: HALBAUER, Hardy, Ettlingen (DE); GALATI GIORDANO, Lorenzo, Stuttgart (DE)
(74) Representative: Nokia EPO representatives

(57) **Abstract**

An apparatus comprising
means for providing upper medium access control (MAC) access point (AP) functionality means for coupling the upper medium access control (MAC) access point (AP) functionality
to a first lower MAC AP functionality provided at a first apparatus via first radio link; means for coupling the upper medium access control (MAC) access point (AP) functionality
to a second lower MAC AP functionality provided at a second apparatus, locatable at a different location than the first apparatus, via a second radio link;
a point to multipoint radio transceiver means configured to provide contemporaneous multipoint links comprising the first radio link and the second radio link at least some radio frequencies between 52.6 GHz and 1THz.

## Description

### TECHNOLOGICAL FIELD

Examples of the disclosure relate to wireless access by an accessing terminal.

In some examples, the accessing terminal uses Wi-Fi as the radio access technology.

### BACKGROUND

Wireless access points (AP) are commonly used to provide network access, particularly internet access, to accessing terminals.

The accessing terminals are often mobile, i.e. configured for mobile communication.

The radio link between the accessing terminal and the access point has a limited maximum bandwidth. It is possible to provide multiple simultaneous radio links to an accessing terminal from one or more access points to increase the maximum bandwidth.

A radio link between an accessing terminal and the access point is subject to interference and this can vary in time.

The radio links can for example use unlicensed radio frequencies such as 2.4GHz and 5GHz in the case of Wi-Fi. However, these spectra might be congested leading to interference .

### BRIEF SUMMARY

According to various, but not necessarily all, examples there is provided
an apparatus comprising
means for providing upper medium access control (MAC) access point (AP) functionality means for coupling the upper medium access control (MAC) access point (AP) functionality
to a first lower MAC AP functionality provided at a first apparatus via first radio link; means for coupling the upper medium access control (MAC) access point (AP) functionality
to a second lower MAC AP functionality provided at a second apparatus, locatable at a different location than the first apparatus, via a second radio link;
a point to multipoint radio transceiver means configured to provide contemporaneous multipoint links comprising the first radio link and the second radio link at at least one radio frequency between 52.6 GHz and 1THz.

In some but not necessarily all examples, the apparatus is configured as a distributed access point multilink device (AP-MLD) apparatus, and the first and second apparatus are distributed AP apparatuses which are locatable at different spatially separated locations.

In some but not necessarily all examples, the upper medium access control (MAC) access point (AP) functionality is configured for contemporaneous sharing by the first lower MAC AP functionality provided at the first apparatus and the second lower MAC AP functionality provided at the second apparatus.

In some but not necessarily all examples, the point to multipoint radio transceiver means is configured to perform beamforming for providing contemporaneous multipoint spatially separated links comprising the first radio link and the second radio link at radio frequencies between between 52.6 GHz and 1THz.

In some but not necessarily all examples, the apparatus comprises means for controlling dynamically reconfiguring at least the first radio link and the second radio link in dependence upon at least a need associated with an apparatus accessing the first apparatus via a lower link.

In some but not necessarily all examples, the at least one need associated with an apparatus accessing the first apparatus via a lower link comprises a least one of the following:
- available bandwidth for the lower link,
- propagation conditions present for the lower link,
- data rate associated with the combination of at least one upper link and at least one lower link, or
- latency associated with the combination of at least one upper link and at least one lower link;
wherein the at least one upper link comprises at least one of the first radio link or the second radio link.

In some but not necessarily all examples, the point to multipoint radio transceiver means is configured to provide the first radio link and the second radio link using the same or overlapping frequency ranges between 52.6 GHz and 1THz.

In some but not necessarily all examples, the point to multipoint radio transceiver means is configured to provide the first radio link as a first beam oriented in a first direction and the second radio link as a second beam oriented in a second direction, spatially offset from the first direction.

In some but not necessarily all examples, the point to multipoint radio transceiver means is configured to provide the first radio link with a maximum data rate exceeding 10 Gbps and is configured to provide the second radio link with a maximum data rate exceeding 10Gps.

In some but not necessarily all examples, the point to multipoint radio transceiver means is configured to operate in unlicensed spectrum between 52.6 GHz and 1THz.

In some but not necessarily all examples, the apparatus is configured to determine, for the transfer of data, one or more of multiple remote apparatus, each of which has lower MAC AP functionality and is connectable, using the multipoint radio transceiver means, via a radio link at at least one radio frequency between 52.6 GHz and 1THz.

In some but not necessarily all examples, the apparatus is configured to determine, for the transfer of the data, a beam pattern that has a beam directed to each one of the determined one or more of multiple remote apparatus.

In some but not necessarily all examples, the apparatus is configured to determine, for the transfer of data, bandwidth and/or transmit power and/or modulation scheme for the one or more radio links of the selected one or more multiple remote apparatus.

In some but not necessarily all examples, the determination is based on evaluation of at least some of the radio links of the multiple remote apparatus or wherein the determination is based on collective evaluation of radio links of the multiple remote apparatus.

In some but not necessarily all examples, the determination is based on data transfer demand and/or total available transmit power and/or the available data rates of the radio links of the multiple remote apparatus and/or available signal-to-noise power ratio.

According to various, but not necessarily all, examples there is provided
a method comprising:
coupling, via a first radio link, upper medium access control (MAC) access point (AP) functionality provided at a control apparatus and a first lower MAC AP functionality provided at a first apparatus, wherein the first radio link uses at least one radio frequency between 52.6 GHz and 1THz;
coupling, via a second radio link, the upper medium access control (MAC) access point (AP) functionality provided at the control apparatus and a second lower MAC AP functionality provided at a second apparatus, located at a different location than the first apparatus , wherein the second radio link uses at least one radio frequency between 52.6 GHz and 1THz.

According to various, but not necessarily all, examples there is provided a computer program that when executed by one or more processors of an apparatus, causes the apparatus to:
couple, via a first radio link, upper medium access control (MAC) access point (AP) functionality provided at the apparatus to a first lower MAC AP functionality provided at a first peripheral apparatus, wherein the first radio link uses at least one radio frequency between 52.6 GHz and 1THz;
couple, via a second radio link, the upper medium access control (MAC) access point (AP) functionality provided at the apparatus and a second lower MAC AP functionality provided at a second peripheral apparatus, locatable at a different location than the first apparatus, wherein the second radio link uses at least one radio frequency between 52.6 GHz and 1THz.

According to various, but not necessarily all, examples there is provided an apparatus comprising:
at least one processor; and
at least one memory storing instructions that, when executed by the at least one processor, cause the apparatus at least to:
   couple, via a first radio link, upper medium access control (MAC) access point (AP) functionality provided at the apparatus to a first lower MAC AP functionality provided at a first apparatus, wherein the first radio link uses at least one radio frequency between 52.6 GHz and 1THz;
   couple, via a second radio link, the upper medium access control (MAC) access point (AP) functionality provided at the apparatus and a second lower MAC AP functionality
   provided at a second apparatus, locatable at a different location than the first apparatus, wherein the second radio link uses at least one radio frequency between 52.6 GHz and 1THz.

According to various, but not necessarily all, examples there is provided
an apparatus comprising
means for providing lower medium access control (MAC) access point (AP) functionality means for coupling the lower medium access control (MAC) access point (AP) functionality
to upper MAC AP functionality provided at a remote apparatus via a radio link; and radio transceiver means configured to provide the radio link at at least one radio frequency between 52.6GHz and 1THz.

According to various, but not necessarily all, examples there is provided
a distributed access system, comprising:
(i) a control apparatus comprising:
   means for providing an upper medium access control access point functionality of the distributed access point system;
   a point to multipoint radio transceiver means configured to provide contemporaneous multipoint links at at least one radio frequency between 52.6 GHz and 1THz to couple the upper medium access control access point functionality contemporaneously to lower MAC access point functionality at a plurality of remote peripheral apparatus;
(ii) a first remote peripheral apparatus of the plurality of the remote peripheral apparatus, provided at a first location, comprising:
   means for providing a first lower medium access control access point functionality of the distributed access point system;
   a first radio transceiver means configured to use at least one of the multipoint links at at least one radio frequency between 52.6 GHz and 1THz to couple the first lower medium access control access point functionality of the first remote peripheral apparatus to the upper medium access control access point functionality of the control apparatus;
   a second radio transceiver means configured to couple the first lower medium access control access point functionality of the first remote peripheral apparatus to a remote terminal apparatus accessing the distributed access point system via a first access radio link; and
(iii) a second remote peripheral apparatus of the plurality of the remote peripheral apparatus, at a second location separated from the first location, comprising:
   means for providing a second lower medium access control access point functionality of the distributed access point system;
   third radio transceiver means configured to use at least one of the multipoint links at at least one radio frequency between 52.6 GHz z and 1THz to couple the second lower medium access control access point functionality to the upper medium access control access point functionality of the control apparatus;
   fourth radio transceiver means configured to couple the second lower medium access control access point functionality to a remote terminal apparatus accessing the distributed access point system via a second access radio link.

According to various, but not necessarily all, examples there is provided an apparatus comprising:
means for providing upper medium access control (MAC) access point (AP) functionality;
means for coupling the upper medium access control (MAC) access point (AP) functionality to a first lower MAC AP functionality provided at a first peripheral apparatus via first radio link;
means for coupling the upper medium access control (MAC) access point (AP) functionality to a second lower MAC AP functionality provided at a second peripheral apparatus via a second radio link; and
radio transceiver means configured to provide the first radio link as a first beam oriented in a first direction and the second radio link as a second beam oriented in a second direction, spatially offset from the first direction, wherein at least one of the first radio link and the second radio link uses at least one radio frequency between 52.6 GHz and 1THz.

According to various, but not necessarily all, embodiments there is provided an apparatus comprising
at least one processor; and
at least one memory including computer program code;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7A & FIG. 7B show another example of the subject matter described herein;
FIG. 8 shows another example of the subject matter described herein;
FIG. 9 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g. lower radio link 140, upper radio link 40) and a specific instance of the class (member of the set) can be referenced using the reference number with a numerical type subscript index (e.g. 40_1, 140_1, 140_11) and a non-specific instance of the class (member of the set) can be referenced using the reference number with a variable type subscript index (e.g. 40_i, 140_j, 140_ij).

### DETAILED DESCRIPTION

It would be desirable to enable a high quality, high bandwidth access for an accessing terminal.

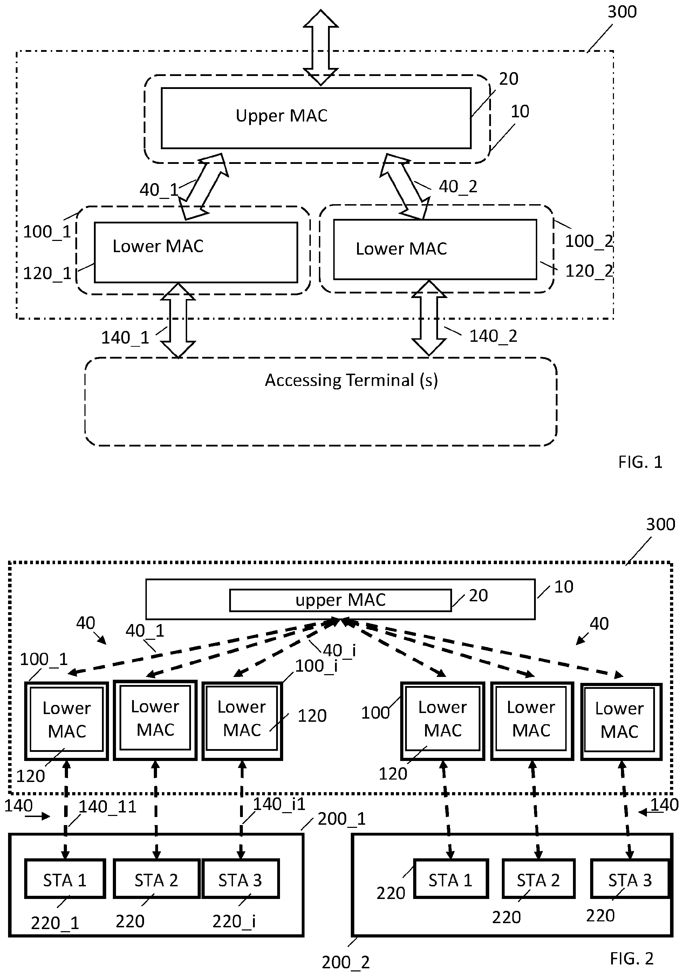

FIG 1 illustrates an example of a distributed access point (AP) system 300. FIG 2 illustrates the distributed access point (AP) system 300 in use.

The distributed access point system 300 comprises multiple access points each of which is accessed by an accessing terminal 200_j through one or more peripheral apparatus 100_i.

The distributed access point system 300 splits its protocol stack, for each access point, between a control apparatus 10 and a peripheral apparatus 100_i. The protocol stack is split at the medium access control (MAC) layer.

The control apparatus 10 comprises upper MAC functionality 20 of the distributed AP system 300. This is referred to as upper medium access control (MAC) access point (AP) functionality 20 and upper MAC functionality 20.

Each peripheral apparatus 100_i comprises lower MAC functionality 120_i of the distributed AP system 300. This is referred to as lower medium access control (MAC) access point (AP) functionality 120 and lower MAC functionality 120.

The control apparatus 10 communicates with a peripheral apparatus 100_i via an upper radio link 40_i. In use, the peripheral apparatuses 100 are typically remote peripheral apparatuses 100 in that they are remotely located with respect to the control apparatus 10.

The peripheral apparatuses 100 can be separately located. For example, the peripheral apparatuses 100 are in different hardware. This means that they require means for interconnection (wireless or wired). There can therefore be significant physical separation between different peripheral apparatuses 100. The separation distance can be more than hundreds of wavelengths @ 1GHz, for example, over 1m.

The distributed access point system 300, is in this example, a distributed access point multi-link-device (AP-MLD) system.

The peripheral apparatuses 100 are distributed apparatuses which are locatable at different spatially separated locations..

Each peripheral apparatus 100_i can use multiple contemporaneous, optionally simultaneous, access links 140 (also referred to as lower radio links) to one or more accessing terminals 200_j. Each accessing terminal 200_j can use multiple contemporaneous, optionally simultaneous, lower radio links 140 to one or more peripheral apparatus 100_i.

An accessing terminal 200_j (Fig. 2) provides an access link termination 220_i for access link 140_i. The access link termination 220_i provides a logical station (STA) operating on a specific lower radio link 140_i.

A peripheral apparatus 100_i can be described as an access point (AP) multi-link device (MLD). An accessing terminal 200_j can be described as a non-access point (non-AP) multi-link device (MLD) or a non-AP MLD.

In at least some examples, some or all of the accessing terminals 200_j are mobile.

In at least some examples, the accessing terminals 200_j are remote accessing terminals 200_j in that they are configured to be able to operate when remotely located from the peripheral apparatuses 100 and from the control apparatus 10

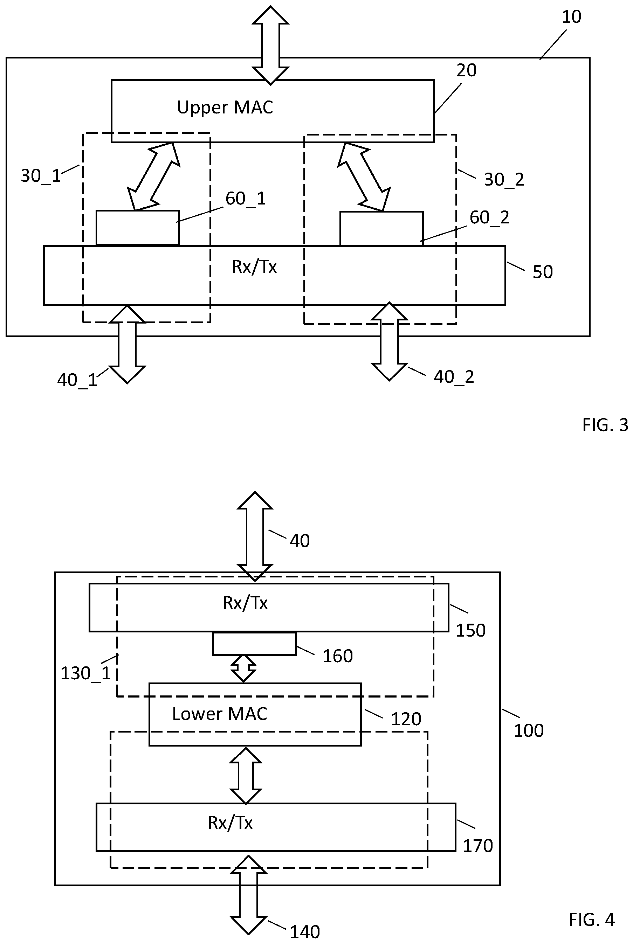

FIG 3 is an example of a control apparatus 10. The control apparatus 10 comprises: means for providing an upper medium access control access point functionality 20 of the distributed access point system 300; and a point to multipoint radio transceiver means 50 configured to provide simultaneous multipoint links 40_i at radio frequencies between 52.6 GHz and 1THz to couple 30 the upper medium access control access point functionality 20 simultaneously to a respective lower MAC access point functionality 120 provided at different remote peripheral apparatus 100 (not illustrated in FIG 3, see FIGs 1 & 2).

While the multipoint radio transceiver means 50 is configured to (capable of) providing simultaneous multipoint links 40, it can also provide non-simultaneous multipoint links 40.

The point to multipoint radio transceiver means 50 is configured to provide upper radio links 40_1, 40_2 at radio frequencies between 52.6 GHz and 1THz.

In at least some examples, the point to multipoint radio transceiver means 50 is configured to provide upper radio links 40_1, 40_2 using the same or overlapping frequency ranges between 52.6 GHz and 1THz.

In at least some examples, the point to multipoint radio transceiver means 50 is configured to provide a first upper radio link 40_1 with a maximum bandwidth (associated with a maximum data rate e.g. Shannon channel capacity) exceeding a threshold and is configured to provide a second radio link 40_2 with a maximum bandwidth exceeding the threshold. In some examples, the threshold is 10 Gbps. In some examples, the threshold is 50 Gbps.

Each upper radio link 40 can support a data rate which is at least as high or higher than the maximum data rate of a lower radio link 140. The use of the upper radio links 40 provides high bandwidth and low interference.

Although the system 300 can be configured to achieve a high capacity, it does not always have to be operated at a high capacity. The data conveyed on an upper radio link 40 can be low, for example, when conveying control information or link setup protocols.

In at least some examples, the point to multipoint radio transceiver means 50 is configured to operate in unlicensed spectrum between 52.6 GHz and 1THz.

In at least some examples, the point to multipoint radio transceiver means 50 is configured to provide the upper radio links 40 at radio frequencies between 110 GHz and 170 GHz, between 116 and 123 GHz, between 175 and 182 GHz or between 185 and 190 GHz or between 244 and 246 GHz.

In at least some examples, the point to multipoint radio transceiver means 50 is configured to operate over a range of contiguous frequencies of at least 2 GHz in an unlicensed spectrum between 52.6 GHz and 1THz.

FIG 3 illustrates a control apparatus 10 comprising:
means for providing upper medium access control (MAC) access point (AP) functionality 20;
means 30_1 for coupling the upper medium access control (MAC) access point (AP) functionality 20 to a first lower MAC AP functionality 120_1 provided at a first peripheral apparatus 100_1 via first upper radio link 40_1;
means 30_2 for coupling the upper medium access control (MAC) access point (AP) functionality 20 to a second lower MAC AP functionality 120_2 provided at a second peripheral apparatus 100_2, locatable at a different location than the first peripheral apparatus 100_1, via a second upper radio link 40_2;
a point to multipoint radio transceiver means 50 configured to provide contemporaneous, optionally simultaneous, multipoint links 40_1, 40_2 comprising the first upper radio link 40_1 and the second upper radio link 40_2 at at least some radio frequencies between 52.6 GHz and 1THz.

In some examples, the point to multipoint radio transceiver means 50 is configured to provide contemporaneous (e.g. simultaneous) multipoint links 40_1, 40_2 comprising the first upper radio link 40_1 and the second upper radio link 40_2 at at least some radio frequencies between 90 GHz and 1THz.

In some examples, the point to multipoint radio transceiver means 50 is configured to provide contemporaneous (e.g. simultaneous) multipoint links 40_1, 40_2 comprising the first upper radio link 40_1 and the second upper radio link 40_2 at at least some radio frequencies between 100 GHz and 1THz.

In some examples, the point to multipoint radio transceiver means 50 is configured to provide contemporaneous (e.g. simultaneous) multipoint links 40_1, 40_2 comprising the first upper radio link 40_1 and the second upper radio link 40_2 at at least some radio frequencies between 52.6/90/100 GHz and 1THz that have at least 2Ghz of concatenated bandwidth.

The frequency ranges enable small form factor apparatus and increased available bandwidth.

FIG 4 is an example of a peripheral apparatus 100. The (and optionally each) peripheral apparatus 100 comprises a radio transceiver means 150 configured to use at least one of the multipoint links 40_1 at radio frequencies between 52.6 GHz and 1THz to couple the first lower medium access control access point functionality 120_1 of a peripheral apparatus 100 to the upper medium access control access point functionality 20 of the remote control apparatus 10 (not illustrated in FIG 4, see FIGs 1 & 2).

The (and optionally each) peripheral apparatus 100 comprises a radio transceiver means 170 configured to use a lower radio link 140 to couple the lower medium access control access point functionality 120 of the remote peripheral apparatus 100 to a remote accessing terminal 200 (not illustrated in FIG 4, see FIGs 1 & 2) configured to access the distributed access point system 300 via the lower radio link 140.

The lower radio links 140 (access radio links) are, in the examples illustrated, Wi-Fi radio links. Wi-Fi radio links operate in the sub 7GHz range, for example 2.4 GHz and 5GHz.

Between upper radio transceiver means 150_i for the upper radio link 40_i and the lower radio transceiver means 170_i for the lower radio link 140_j, there can be a physical layer functional block (it is part of the protocol stack).

FIG 4 illustrates an example of a peripheral apparatus 100 comprising means for providing lower medium access control (MAC) access point (AP) functionality 120;
means 130_1 for coupling the lower medium access control (MAC) access point (AP) functionality 120 to upper MAC AP functionality 20 provided at a remote control apparatus 10 via an upper radio link 40; and
radio transceiver means 150 configured to provide the upper radio link 40 at radio frequencies between 52.6 GHz and 1THz, for example or at some other sub-THz range defined elsewhere.

In this example, an interface decoder/encoder 60_i is provided at the control apparatus 10 (FIG 3) to encode information transmitted over the upper radio links 40_i by the multipoint radio transceiver means 50 and to decode information received over the upper radio links 40_i at the multipoint radio transceiver means 50. An interface decoder/encoder 160 is provided at the peripheral apparatus 100 to encode information transmitted over the upper radio links 40_i by the radio transceiver means 150 and to decode information received over the upper radio link 40 at the radio transceiver means 150.

From the foregoing, it will be appreciated that the distributed access point (AP) system 300 comprises: a control apparatus 10; a first remote peripheral apparatus 100_1, at a first location; and at least a second remote peripheral apparatus 100_ 2, at a second location separated from the first location.

The control apparatus 10 comprises: means for providing an upper medium access control access point functionality 20 of the distributed access point system 300; a point to multipoint radio transceiver means 50 configured to provide contemporaneous (e.g. simultaneous) multipoint links 40 at radio frequencies between 52.6 GHz and 1THz to couple the upper medium access control access point functionality 20 contemporaneously (e.g. simultaneously) to lower MAC access point functionality 120 at different remote peripheral apparatuses 100.

The first remote peripheral apparatus 100_1, comprises: means for providing a first lower medium access control access point functionality 120_1 of the distributed access point system 300; a first radio transceiver means 150 configured to use at least one of the multipoint links 40_1 at radio frequencies between 52.6 GHz and 1THz to couple the first lower medium access control access point functionality 120_1 of the first remote peripheral apparatus 100_1 to the upper medium access control access point functionality 20 of the remote control apparatus 10; and a second radio transceiver means 170 configured to couple the first lower medium access control access point functionality 120_1 of the first remote peripheral apparatus 100_1 to a remote accessing apparatus 200 configured to access the distributed access point system 300 via a first lower radio link 140_1 (first access radio link 140_1.

The peripheral apparatus 100_2 comprises: means for providing a second lower medium access control access point functionality 120_2 of the distributed access point system 300; third radio transceiver means 150 configured to use at least one of the multipoint links 40 at radio frequencies between 52.6 GHz and 1THz to couple the second lower medium access control access point functionality 120_2 to the upper medium access control access point functionality 20 of the remote control apparatus 10; and fourth radio transceiver means 170 configured to couple the second lower medium access control access point functionality 120_2 to a remote accessing apparatus 200 configured to access the distributed access point system 300 via a second lower radio link 140_2 (second access radio link 140_2.

The remote accessing apparatus 200 configured to access the distributed access point system 300 via a first lower radio link 140_1 can be the same apparatus or a different apparatus than the remote accessing apparatus 200 configured to access the distributed access point system 300 via the second lower radio link 140_2.

In at least some examples, the control apparatus 10 and the peripheral apparatuses 100 are quasi-static. That is, they are movable, but normally have a fixed positional relationship in use. This results in a quasi-static spatial orientation of each intermediate apparatus 100 relative to the control apparatus 10.

In some examples the upper radio link 40_1 from the control apparatus 10 to the first peripheral apparatus 100_1 has a fixed spatial orientation relative to the control apparatus 10 and the upper radio link 40_2 from the control apparatus 10 to the second peripheral apparatus 100_2 has a different fixed spatial orientation relative to the control apparatus 10.

The upper medium access control (MAC) access point (AP) functionality 20 is configured for contemporaneous (e.g. simultaneous) sharing by, connection with and control of the first lower MAC AP functionality 120_1 provided at the first peripheral apparatus 100_1 and the second lower MAC AP functionality 120_2 provided at the second peripheral apparatus 100_2

Upper MAC is the entity that distributes the traffic streams to the lower MACs. It assumes the role of coordinator in this distributed MLD architecture.

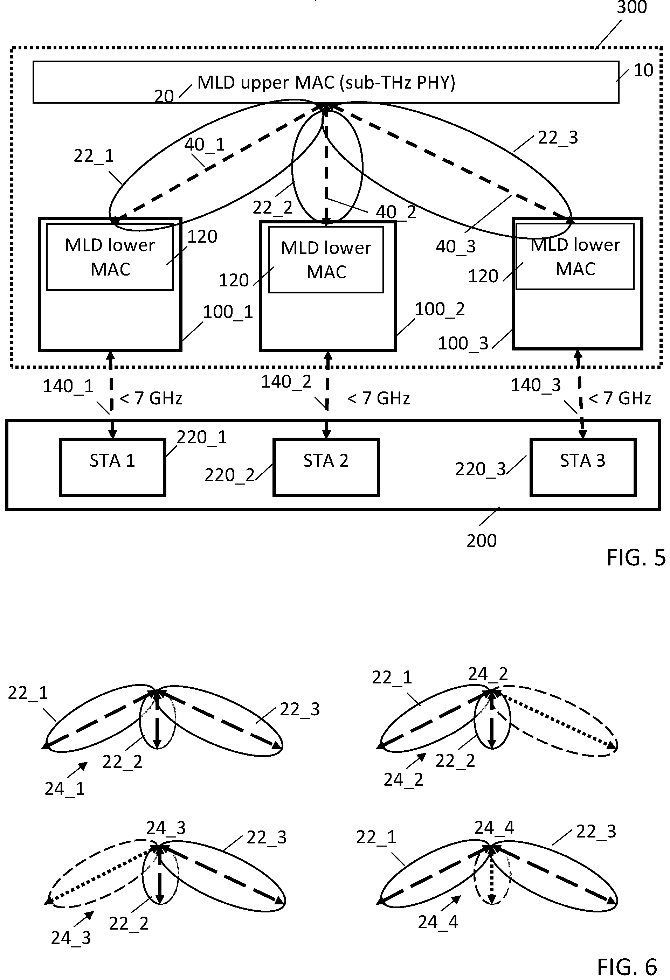

FIG 5 illustrates an example of a distributed access point (AP) system 300 as previously described. In this example, beams are formed by the radio transceiver means 50 of the control apparatus 10 and used for point to multi-point communication between the control apparatus 10 and the peripheral apparatuses 100.

One or more beams are used to provide the upper radio links 40.

In some examples, the radio links 40_1 and 40_2 are physically separated (e.g. distinct beams) with separate streams. In at least some examples, the point to multipoint radio transceiver means 50 is configured to provide the first upper radio link 40_1 as a first beam 22_1 oriented in a first direction and the second radio link 40_2 as a second beam 22_2 oriented in a second direction, spatially offset from the first direction.

In some examples, the upper radio links 40_1 and 40_2 are not physically separated (e.g. single beam with a single data stream) but are logically separated (e.g. stream separation). For example, the data of the radio links 40_1 and 40_2 can be transmitted in a single stream to both directions over a beam pattern with shape of two contemporaneous (e.g. simultaneous) beams, and the separation of the data for 120_1 and 120_2 is done in the respective lower MAC functionality 120_1 and 120_2 or elsewhere.

In at least some examples, the point to multipoint radio transceiver means 50 (see e.g. Fig. 3) is configured to provide contemporaneous (e.g. simultaneous) multipoint spatially separated, beamformed upper radio links 40 comprising a first upper radio link 40_1 and a second upper radio link 40_2 (Fig. 5) at radio frequencies between 52.6 GHz and 1THz.

In some examples the upper radio link 40_1 from the control apparatus 10 to the first peripheral apparatus 100_1 is provided using a radio beam. In some examples, the upper radio link 40_2 from the control apparatus 10 to the second peripheral apparatus 100_2 is provided using a radio beam. In some examples the radio link 40_1 from the control apparatus 10 to the first peripheral apparatus 100_1 is provided using a first radio beam and the radio link 40_2 from the control apparatus 10 to the second peripheral apparatus 100_2 is provided using a second, different radio beam. In some examples the upper radio link 40_1 from the control apparatus 10 to the first peripheral apparatus 100_1 and the upper radio link 40_2 from the control apparatus 10 to the second peripheral apparatus 100_2 are provided using a common radio beam or a radio beam pattern.

FIG 6 illustrates examples of different beam patterns 24.

In at least some examples, the multipoint radio transceiver means 50 supports beam-forming and the creation of one or more beams for the radio links 40. In at least some examples, the multipoint radio transceiver means supports contemporaneous (e.g. simultaneous) beam-forming and the creation of a beam pattern 24 for the radio links 40.

The beam patterns 24_1 comprises beams 22_1, 22_2, 22_3. The beam patterns 24_2 comprises beams 22_1, 22_2. It does not comprise beam 22_3. The beam patterns 24_3 comprises beams 22_2, 22_3. It does not comprise beam 22_1.

The beam patterns 24_4 comprises beams 22_1, 22_3. It does not comprise beam 22_2.

In at least some examples the point to multipoint transceiver means 50 of the control apparatus 10 is configured for beam-forming. In some examples, an antenna of the point to multipoint transceiver means 50 is configured for beam-forming. In some examples, the antenna is an array comprising at least 64 elements. Beam-forming can be achieved with other antennas without array structure.

An antenna array can be used for dynamic beam forming. A fixed beam pattern antenna which is aligned during installation could also be used.

A complete link from the control apparatus 10 to an accessing terminal 200_j comprises an upper radio link 40_i and a lower radio link 140_ij. The upper radio link 40_i is between the control apparatus 10 and a peripheral apparatus 100_i. The lower radio link 140_ij is between a peripheral apparatus 100_i and an accessing terminal 200_j. The complete link therefore has a pair of hops (links), the upper radio link 40_i and the lower radio link 140_ij. The complete link is a concatenation of the upper radio link 40_i and the lower radio link 140_ij.

The control apparatus 10 comprises means for configuring a complete link from the control apparatus 10 to an accessing terminal 200_j by configuring the appropriate upper radio link 40_i and configuring the appropriate lower radio link 140_ij. For example, the peripheral apparatus 100_i can be selected. This selects the upper radio link 40_i and can, for example, select beam-forming. For example, characteristics of an upper radio link 40 can be selected. Examples of characteristics include frequency, beam direction, bandwidth, transmit power, modulation scheme for the one or more independent radio links of the selected one or more multiple peripheral apparatus 100. For example, characteristics of a lower radio link 140 can be selected. Examples of characteristics include frequency, beam direction, bandwidth, transmit power, modulation scheme for the one or more independent radio links of the selected one or more multiple peripheral apparatus 100.

The control apparatus 10 comprises means for reconfiguring a complete link from the control apparatus 10 to an accessing terminal 200_j by configuring at least one of the upper radio link 40_i and the appropriate lower radio link 140_ij. For example, the peripheral apparatus 100_i can be changed. This changes the upper radio link 40_i and can, for example, change beam-forming. For example, one or more characteristics of an upper radio link 40 can be changed. Examples of characteristics include frequency, beam direction, bandwidth, transmit power, modulation scheme for the one or more independent radio links of the selected one or more multiple peripheral apparatus 100. For example, characteristics of a lower radio link 140 can be changed. Examples of characteristics include frequency, beam direction, bandwidth, transmit power, modulation scheme.

The control apparatus 10 comprises means for (re)configuring (i.e. configuring or reconfiguring) complete links from the control apparatus 10 to the accessing terminal 200_j by (re)configuring multiple complete links from the control apparatus 10 to the accessing terminal 200_j .

The (re)configuring can be dynamic.

For example, the (re)configuring of one or more links in dependence upon at least a need associated with the accessing terminal 200_j .

The reconfiguration is associated with the data rate or capacity requirement of an accessing terminal 200_j and the availability of lower radio links 140_ij (the Wi-Fi links). Based on that, the peripheral apparatuses 100_i are assigned to the accessing terminal 200_j. The upper radio links 40_i are usually available, but the grouping of them for specific accessing terminals 200_j is according to the lower radio links 140 (Wi-Fi links) availability.

The control apparatus 10 is configured to determine, for the transfer of data to/from an accessing terminal 200_j, one or more of multiple peripheral apparatuses 100_i, each of which has lower MAC AP functionality 120_i and is connectable, using the multipoint radio transceiver means 50, via a spatially independent upper radio link 40_ij at radio frequencies between 52.6 GHz and 1THz.

In at least some examples, the determination is based on evaluation of the spatially independent upper radio links 40_i of the multiple peripheral apparatuses 100_i for the transfer of data and/or is based on evaluation of the lower radio links 140_j of the multiple peripheral apparatuses 100_i for the transfer of data.

In at least some examples, the determination is based on collective evaluation of the spatially independent upper radio links 40_i of the multiple peripheral apparatuses 100_i for the transfer of data and/or is based on collective evaluation of the lower radio links 140_j of the multiple peripheral apparatuses 100_i for the transfer of data. Collective evaluation means that the links are evaluated together. In some examples, the determination is based on collective evaluation of all the links 40_i, 140_j .

In at least some examples, the determination is based on selective evaluation of the spatially independent upper radio links 40_i of the multiple peripheral apparatuses 100_i for the transfer of data and/or selective evaluation of the lower radio links 140_j of the multiple peripheral apparatuses 100_i for the transfer of data. Selective evaluation means that a link is evaluated individually. In some examples, the determination is based a search of links 40_i until a suitable link or links 40_i* is found and then a search of the dependent links 140_i*j_ until a suitable link or links 140_i*j* is found.

In at least some examples, the determination is based on data transfer demand (amount, latency, reliability) and/or total available transmit power and/or available signal-to-noise ratio and/or available data rate.

The upper MAC functionality 20 has the control over the establishment and use of the radio links 40, 140. It takes account of traffic characteristic of the accessing terminal 200_j, its QoS requirements and other parameters like lower radio link 140_ij availability, propagation conditions, etc... and the traffic characteristic of the upper radio links 40_i.

In some examples, the upper MAC functionality 20, controls the distribution of the data over the available lower radio links 140_ij. connecting an accessing terminal 200_j in parallel over multiple lower radio links 40_ij (e.g. Wi-Fi links) to different peripheral apparatus 100_i.

In at least some examples, the control apparatus 10 is configured to determine, for the transfer of the data, a beam pattern 24 that has a beam directed to each one of the determined one or more multiple peripheral apparatuses 100_i.

As the relative location of the control apparatus 10 and the multiple peripheral apparatuses 100_i is quasi-static, the parameters for beam forming can be quasi-static. They can therefore be pre-calculated and stored in memory, and then retrieved from memory on demand.

Since the maximum transmit power is limited, the maximum available transmit power per beam depends on the selected beam pattern. The transmit power can be adapted according to the needed data rate and link conditions.

If only a moderate data rate is required, a modulation scheme with lower spectral efficiency might be sufficient. Such a modulation scheme requires less SNR and therefore can be transmitted with lower transmit power.

A limited total available transmit power can be split solely among the activated beams, or alternatively kept under control by selecting the amount of band assigned to each beam.

If the connection on a specific beam pattern does not require the maximum available transmit power to meet the connection requirements, it can be reduced accordingly to save energy.

A beam pattern 24_i can be applied for measurement transmissions sent by the control apparatus 10. These measurement transmissions are conducted with a known transmit power and a defined signal format. From the measurement transmissions received at the multiple peripheral apparatuses 100_i a quality parameter can be determined. Examples of quality parameters include , for example, the received signal strength, the signal-to-noise ratio. This measurement information can be embedded into a specific control message which is transmitted to the control apparatus 10. From this information, the control apparatus 10 can determine a data rate for any possible usable modulation format for each upper radio link 40_i. Also a prediction can be made for achievable data rates if different (e.g. reduced) transmit power levels will be applied, e.g. if multiple beams with reduced transmit power should be applied.

This functionality of data rate determination can also be located in the multiple peripheral apparatuses 100_i and only the available data rates for each modulation format could be reported back to the control apparatus 10.

The lower radio links 140 are standard Wi-Fi links which have standard means to derive link quality and achievable data rates. This information is provided to the upper MAC functionality 20. For this, peripheral apparatus 100_i and control apparatus 10 can have in place a sub-THz communication link (i.e. upper radio link 40_i) and means to exchange information (control and data) between them (i.e. transceivers 50/150 and interface decoder/encoder 60/160).

In contrast to the radio link quality measurements of the upper radio links 40 (the sub-THz links) which can be derived regularly due to the quasi-fixed structure, the information about the Wi-Fi link quality needs to be derived in case of a traffic demand for the lower radio links 140_ij (the Wi-Fi links) for the specific location of the accessing terminal 200_j.

With the radio link capability information of the lower radio links 140_ij (the Wi-Fi links) and the upper radio links 40_i (the sub-THz links) for the different beam configurations, the upper MAC functionality 20 calculates the achievable data rates of any of the available complete links 40_i, 140_ij (the concatenated sub-THz and Wi-Fi links) and selects one complete link configuration (a combinations of one or more sub-THz and Wi-Fi links) which meets the traffic demand of the accessing terminal 200_i and needs lowest possible transmit power.

Such traffic demand of the accessing terminal, herein also referred to as the need of the accessing terminal, may comprise at least one of the following:
- available bandwidth (e.g. different lower links may have different band requirements)
- propagation conditions (e.g. different lower links may see different attenuations)
- data rate (e.g. the combination of upper and lower links that better satisfies the request of the accessing terminal), or
- latency (e.g. different links may present more or less contentions).

In some examples, only certain peripheral apparatus 100_i will provide lower radio links 140_ij to the accessing terminal 200_j. This is because the accessing terminal 200_j has the possibility to use a multitude of lower radio links 140_ij for satisfying its traffic requests, and the selection of the most appropriate lower radio links 140_ij to use is a decision taken by the upper MAC functionality 20 as a function of the joint upper radio link 40_i and lower radio link 140_ij link condition/capabilities.

In one embodiment, this selection in its simplest way can be done by taking all data rates of all available complete links (all sub-THz & Wi-Fi link concatenations) and select the one with the lowest data rate which still meets the demand. If this data rate is still above the demand, the transmit power on the upper radio link 40 (the sub-THz link) can be reduced until the radio link quality just fulfils the demand.

If the achievable data rate of the complete link with the highest data rate is not sufficient to meet the demand, plural complete links can be used. For example, the complete link with the second highest data rate capability can be added, and so on until the required data rate is achieved.

As an alternative, in another embodiment, multiple complete links (concatenations) with less than the highest achievable data rate can be combined, to approach the data rate demand as close as possible.

As criteria for the selection, the required transmit power or total power consumption of the upper radio links 40_i (the sub-THz links) and/or (if available) the total power consumption of the upper radio links 40_i (the sub-THz links) and the peripheral apparatus 100_i can be applied.

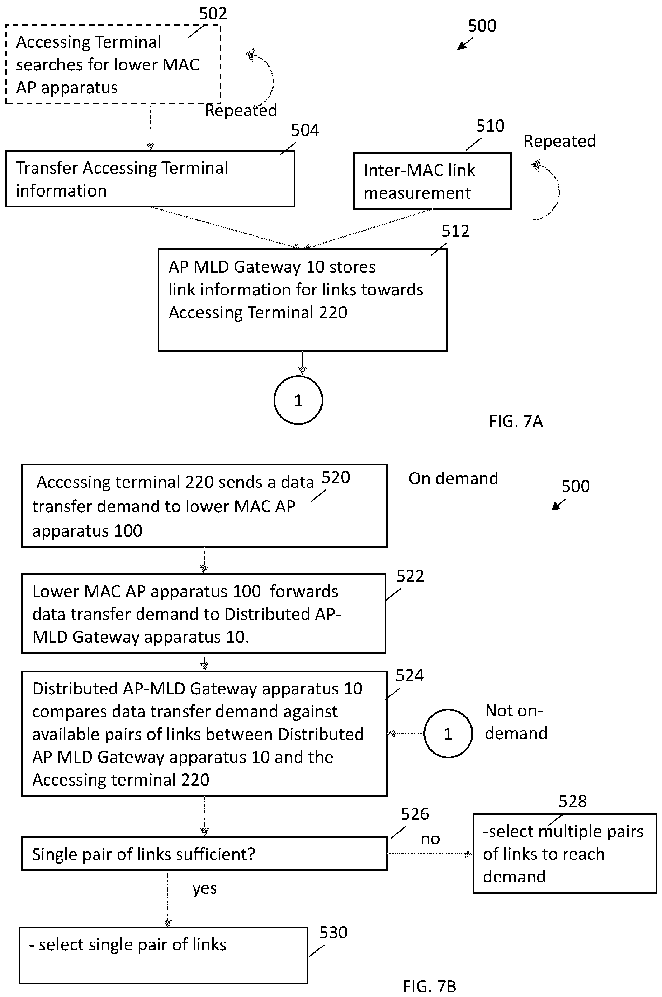

FIG 7A and 7B illustrate an example of a method 500 of dynamic (re) configuration.

Referring to FIG 7A, at block 502, the accessing terminal 200_j searches for peripheral apparatuses 100 within reach, using Wi-Fi communication. The accessing terminal 200_j can, for example, obtain Wi-Fi, link parameter/information for lower radio links 140_jj.

At block 504, the accessing terminal 200_j can, for example, send the obtained Wi-Fi link parameter/information for lower radio links 140_jj to one or more peripheral apparatuses 100 within reach of the accessing terminal 200_j. The one or more peripheral apparatuses 100 within reach of the accessing terminal 200_j forward the Wi-Fi link parameter/information transparently to the control apparatus10.

The lower radio links 140_ij between an accessing terminal 200_j and a peripheral apparatus 100_i operate at a lower frequency, for example sub-7GHz.

At block 510, there is a measurement performed for the upper radio links 40 that couple the upper MAC functionality 20 in the control apparatus 10 and the lower MAC functionality 120_i in the various peripheral apparatuses 100_i.

The upper radio links 40_i between the control apparatus 10 and a peripheral apparatus 100_i operate at a higher frequency, for example frequencies between 52.6 GHz and 1THz.

In some examples, the control apparatus 10 sends measurement signals to all the peripheral apparatuses 100 on individual beams 24_i or on all possible beam configurations 24 in the frequency range 52.6 GHz and 1THz. The peripheral apparatuses 100_i measure the sub-THz link parameter/information per beam for the upper radio links 40_i. The peripheral apparatuses 100_i send the measured link quality information per beam configuration back to the control apparatus 10, in addition also to information on achievable transmit power.

At block 512, the control apparatus 10 stores received link information for the upper radio links 40_i and the lower radio links 140_ij towards the accessing terminals 200_j. The received link information includes Wi-Fi link parameter/information (link quality, SNR, achievable rate, ...) for the lower radio links 140 and sub-THz link parameter/information (link quality, SNR, achievable rate, ...) for the upper radio links/beams 40.

The block 502 can update and repeat every few seconds, for example. The block 510 can update and repeat every few seconds, for example. Thus blocks 502, 504, 510, 512 can update and repeat every few seconds, for example. The control apparatus 10 stores and updates repeatedly received information from all lower radio links 140 and all upper radio links 40.

Referring to FIG 7B, at block 520, the accessing terminal 200_i sends a data transfer demand (e.g. buffer status report) to one or more peripheral apparatuses 100_i within reach of the accessing terminal 200_j via a lower radio link 140. The lower radio links 140_ij between an accessing terminal 220_j and a peripheral apparatus 100_i operate at a lower frequency, for example sub-7GHz.

At block 522, that peripheral apparatus 100_i forwards the data transfer demand to the control apparatus 10 via an upper radio link 40_i. The upper radio links 40_i between the control apparatus10 and the peripheral apparatuses 100_i operate at a higher frequency, for example between 52.6 GHz and 1THz

At block 524, the control apparatus 10 compares the received data transfer demand against available pairings of upper radio links 40_i and lower radio links 140_ij that form a complete (concatenated) link between the control apparatus 10 and the accessing terminal 200_j that sent the data transfer demand.

A lower radio link 140_ij is between the accessing terminal 200_j and a putative peripheral apparatus 100_i and operates at a lower frequencies, for example sub-7GHz.

A higher link 40_i is between the control apparatus 10 and the putative peripheral apparatus 100_i and operates at higher frequencies, for example between 52.6 GHz and 1THz.)

The control apparatus 10 repeatedly compares received data transfer demand requirements with information for all the upper and lower radio links 40, 140 available between the control apparatus 10 and a target accessing terminal 200_j.

At block 526, the control apparatus 10 determines if there is a suitable single complete link available that satisfies the demand. If yes, at block 530, the control apparatus 10 selects the suitable single complete link for use. The complete links is defined by a pairings of an upper radio link 40_i and a lower radio link 140_ij that form a concatenated link between the control apparatus 10 and the accessing terminal 200_j that sent the data transfer demand. If no, at block 528, the control apparatus 10 selects the suitable multiple complete links for use that will in combination satisfy the demand. Each complete link is defined by a pairing of an upper radio link 40_i and a lower radio link 140_ij that form a concatenated link between the control apparatus 10 and the accessing terminal 200_j that sent the data transfer demand.

Transmission power and modulation schemes on the upper and/or lower radio links of the complete link(s) can be adapted to match the demanded rate exactly.

The control apparatus 10 can control characteristics of an upper radio link 40 used in a complete link. For example, it can decide beam characteristics (beam shape, direction etc), contiguous frequencies used between be in 52.6 GHz and 1THz, bandwidth, transmit power, modulation scheme.

The control apparatus 10 can control characteristics of a lower radio link 140 used in a complete link. For example, it can control Wi-Fi parameters of the lower radio link 140.

The dynamic (re)configuring comprises dynamic assignment of a peripheral apparatus 100_i to an accessing terminal 200_j in dependence on availability and suitability of the lower radio link 140_ij in terms of achievable capacity. Only peripheral apparatuses 100_i which are in reach of the accessing terminal 200_j will be connected. When the accessing terminal 200_j is moving, the peripheral apparatuses 100_i with best connections changes, so that the control apparatus 10 re-connects to one or some of them. This reconfiguring of the assignment between accessing terminal 200_j and peripheral apparatuses 100_i depends on the properties of the lower radio links 140_ij and is dynamic with respect to changes in these properties. This can require that the control apparatus 10 adapt the beam pattern accordingly.

The dynamic (re)configuring comprises dynamic adaptation based on data rate demand at the accessing terminal 200_j. The total capacity or data rate required on the lower radio link(s) 140 depends on the current requirement of the accessing terminal 200_j. The total data rate available between the control apparatus 10 and the accessing terminal 200_j is the sum of the data rates of the complete links. If the requirement of the accessing terminal 200_j is varying, the control apparatus 10 dynamically decides how many and which of the available complete links will be activated.

The control apparatus 10 can also dynamically adapt (e.g. reduce) the transmit power of the upper radio link 40_i if the data rate requirements can tolerate a lower signal strength, to adapt the radio link capacity to the required data rate as close as possible, to reduce energy consumption.

The decisions of the control apparatus 10 can be performed in the upper MAC functionality 20 and can, for example, be based on:
link quality information of lower radio links 140 provided by accessing terminals 200;
connection requirement information provided by accessing terminals 200;
link quality information of upper radio links 40 provided by peripheral apparatuses 100.

Only the required point-to-multipoint connections (upper radio links 40) need to be activated. For example, if an accessing terminal 200_j needs only a subset of the available peripheral apparatuses 100, only those will be served by an appropriate antenna beam(s).

The distributed access point (AP) system 300 as previously described can find application in different scenarios. Useful applications are expected to include indoor deployments, for example, airport halls, shopping malls or office areas.

The control apparatus 10 can, in at least some examples, be connected to an internet service provider, for example via an optical line termination or other wired means.

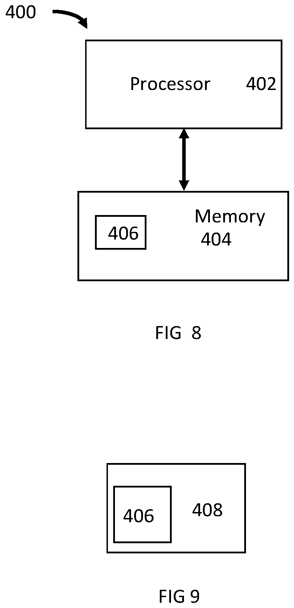

Fig 8 illustrates an example of a controller 400 suitable for use in an apparatus 10, 100, 200. Implementation of a controller 400 may be as controller circuitry. The controller 400 may be implemented in hardware alone, have certain aspects in software including firmware alone or can be a combination of hardware and software (including firmware).

As illustrated in Fig 8 the controller 400 may be implemented using instructions that enable hardware functionality, for example, by using executable instructions 406 in a general-purpose or special-purpose processor 402 that may be stored on a machine readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores instructions, program, or code 406 that controls the operation of the apparatus 10, 100, 200 when loaded into the processor 402. The computer program instructions, program or code 406, provide the logic and routines that enables the apparatus 10, 100, 200 to perform the methods illustrated in the accompanying FIGs. The processor 402 by reading the memory 404 is configured to load and execute the instructions, program, or code 406.

The [control] apparatus 10 comprises:
at least one processor 402; and
at least one memory 404 storing instructions that, when executed by the at least one processor 402, cause the apparatus 10 at least to:
   couple, via a first radio link 40_1, upper medium access control (MAC) access point (AP) functionality provided at the [control] apparatus 10 to a first lower MAC AP functionality provided at a first [intermediate] apparatus 100_1, wherein the first radio link uses at least some radio frequencies between 52.6 GHz and 1THz;
   couple, via a second radio link 40_2, the upper medium access control (MAC) access point (AP) functionality provided at the [control] apparatus 10 and a second lower MAC AP functionality provided at a second [intermediate] apparatus 100_2, locatable at a different location than the first apparatus 100_1, wherein the second radio link uses at least some radio frequencies between 52.6 GHz and 1THz.

An [intermediate] apparatus 100 comprises:
at least one processor 402; and
at least one memory 404 storing instructions that, when executed by the at least one processor 402, cause the apparatus 100 at least to:
   couple, via a first radio link 140, upper medium access control (MAC) access point (AP) functionality provided at a [control] apparatus 10 to a first lower MAC AP functionality provided at the [intermediate] apparatus 100, wherein the first radio link uses at least some radio frequencies between 52.6 GHz and 1THz.

As illustrated in Fig 9, the instructions, program, or code 406 may arrive at the apparatus 10, 100, 200 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10, 100, 200 may propagate or transmit the computer program 406 as a computer data signal. The term "non-transitory" as used herein, is a limitation of the medium itself (i.e., tangible, not a signal ) as opposed to a limitation on data storage persistency (e.g., RAM vs. ROM).

Computer program instructions for causing a [control] apparatus 10 to perform at least the following or for performing at least the following:
couple, via a first radio link, upper medium access control (MAC) access point (AP) functionality provided at the [control] apparatus 10 to a first lower MAC AP functionality provided at a first [intermediate] apparatus 100_1, wherein the first radio link uses at least some radio frequencies between 52.6 GHz and 1THz;
couple, via a second radio link, the upper medium access control (MAC) access point (AP) functionality provided at the [control] apparatus 10 and a second lower MAC AP functionality provided at a second [intermediate] apparatus 100_2, locatable at a different location than the first [intermediate] apparatus 100_1, wherein the second radio link uses at least some radio frequencies between 52.6 GHz and 1THz.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:
(a) hardware-only circuitry implementations (such as implementations in only analog and/or digital circuitry) and
(b) combinations of hardware circuits and software, such as (as applicable):
   i.a combination of analog and/or digital hardware circuit(s) with software/firmware and
   ii.any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 10, 100, 200 can, for example be a module. A controller 400 of the apparatus 10, 100, 200 can, for example be a module.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or
rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks;
ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility. The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements. Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising
means for providing upper medium access control (MAC) access point (AP) functionality means for coupling the upper medium access control (MAC) access point (AP) functionality
to a first lower MAC AP functionality provided at a first apparatus via first radio link; means for coupling the upper medium access control (MAC) access point (AP) functionality
to a second lower MAC AP functionality provided at a second apparatus, locatable at a different location than the first apparatus, via a second radio link;
a point to multipoint radio transceiver means configured to provide contemporaneous multipoint links comprising the first radio link and the second radio link at at least one radio frequency between 52.6 GHz and 1THz.

2. An apparatus as claimed in claim 1, wherein the apparatus is configured as a distributed access point multilink device (AP-MLD) apparatus, and the first and second apparatus are distributed AP apparatuses which are locatable at different spatially separated locations.

3. An apparatus as claimed in claim 1 or 2, wherein the upper medium access control (MAC) access point (AP) functionality is configured for contemporaneous sharing by the first lower MAC AP functionality provided at the first apparatus and the second lower MAC AP functionality provided at the second apparatus.

4. An apparatus as claimed in any preceding claim, wherein the point to multipoint radio transceiver means is configured to perform beamforming for providing contemporaneous multipoint spatially separated links comprising the first radio link and the second radio link at radio frequencies between 52.6 GHz and 1THz.

5. An apparatus as claimed in any preceding claim, comprising means for controlling dynamically reconfiguring at least the first radio link and the second radio link in dependence upon at least a need associated with an apparatus accessing the first apparatus via a lower link.

6. The apparatus of claim 5, wherein the at least one need associated with an apparatus accessing the first apparatus via a lower link comprises a least one of the following:
- available bandwidth for the lower link,
- propagation conditions present for the lower link,
- data rate associated with the combination of at least one upper link and at least one lower link, or
- latency associated with the combination of at least one upper link and at least one lower link;
wherein the at least one upper link comprises at least one of the first radio link or the second radio link.

7. An apparatus as claimed in any preceding claim, wherein the point to multipoint radio transceiver means is configured to provide the first radio link and the second radio link using the same or overlapping frequency ranges between 52.6 GHz and 1THz.

8. An apparatus as claimed in any preceding claim, wherein the point to multipoint radio transceiver means is configured to provide the first radio link as a first beam oriented in a first direction and the second radio link as a second beam oriented in a second direction, spatially offset from the first direction.

9. An apparatus as claimed in any preceding claim, wherein the point to multipoint radio transceiver means is configured to provide the first radio link with a maximum data rate exceeding 10 Gbps and is configured to provide the second radio link with a maximum data rate exceeding 10Gps.

10. An apparatus as claimed in any preceding claim, wherein the point to multipoint radio transceiver means is configured to operate in unlicensed spectrum between 52.6 GHz and 1THz.

11. An apparatus as claimed in any preceding claim, wherein the apparatus is configured to determine, for the transfer of data, one or more of multiple remote apparatus, each of which has lower MAC AP functionality and is connectable, using the multipoint radio transceiver means, via a radio link at at least one radio frequency between 52.6 GHz and 1THz.

12. An apparatus as claimed in claim 11, wherein the determination, for the transfer of data, is based on at least one of the following:
- a beam pattern that has a beam directed to each one of the determined one or more of multiple remote apparatus;
- bandwidth and/or transmit power and/or modulation scheme for the one or more radio links of the selected one or more multiple remote apparatus;
- evaluation of at least some of the radio links of the multiple remote apparatus;
- collective evaluation of radio links of the multiple remote apparatus;
- data transfer demand;
- total available transmit power;
- the available data rates of the radio links of the multiple remote apparatus; or
- available signal-to-noise power ratio.

13. A computer program that when executed by one or more processors of an apparatus, causes the apparatus to:
couple, via a first radio link, upper medium access control (MAC) access point (AP) functionality provided at the apparatus to a first lower MAC AP functionality provided at a first peripheral apparatus, wherein the first radio link uses at least one radio frequency between 52.6 GHz and 1THz;
couple, via a second radio link, the upper medium access control (MAC) access point (AP) functionality provided at the apparatus and a second lower MAC AP functionality provided at a second peripheral apparatus, locatable at a different location than the first apparatus, wherein the second radio link uses at least one radio frequency between 52.6 GHz and 1THz.

14. An apparatus comprising
means for providing lower medium access control (MAC) access point (AP) functionality means for coupling the lower medium access control (MAC) access point (AP) functionality
to upper MAC AP functionality provided at a remote apparatus via a radio link; and
radio transceiver means configured to provide the radio link at at least one radio frequency between 52.6GHz and 1THz.

15. A distributed access system, comprising:
a control apparatus comprising:
means for providing an upper medium access control access point functionality of the distributed access point system;
a point to multipoint radio transceiver means configured to provide contemporaneous multipoint links at at least one radio frequency between 52.6 GHz and 1THz to couple the upper medium access control access point functionality contemporaneously to lower MAC access point functionality at a plurality of remote peripheral apparatus;
a first remote peripheral apparatus of the plurality of the remote peripheral apparatus,
provided at a first location, comprising:
means for providing a first lower medium access control access point functionality of the distributed access point system;
a first radio transceiver means configured to use at least one of the multipoint links at at least one radio frequency between 52.6 GHz and 1THz to couple the first lower medium access control access point functionality of the first remote peripheral apparatus to the upper medium access control access point functionality of the control apparatus;
a second radio transceiver means configured to couple the first lower medium access control access point functionality of the first remote peripheral apparatus to a remote terminal apparatus accessing the distributed access point system via a first access radio link; and
a second remote peripheral apparatus of the plurality of the remote peripheral apparatus, at a second location separated from the first location, comprising:
means for providing a second lower medium access control access point functionality of the distributed access point system;
third radio transceiver means configured to use at least one of the multipoint links at at least one radio frequency between 52.6 GHz z and 1THz to couple the second lower medium access control access point functionality to the upper medium access control access point functionality of the control apparatus;
fourth radio transceiver means configured to couple the second lower medium access control access point functionality to a remote terminal apparatus accessing the distributed access point system via a second access radio link.
